# EUROPEAN PATENT SPECIFICATION

(11) **EP 3 298 934 B1**
(45) Date of publication and mention of the grant of the patent: **15.05.2019**
(21) Application number: 17191458.3
(22) Date of filing: 15.09.2017
(51) Int. Cl.: A47J 31/46, A47J 42/16

(54) **BEVERAGE PREPARATION MACHINE**
GETRÄNKEZUBEREITUNGSMASCHINE
MACHINE DE PRÉPARATION DE BOISSONS

(30) Priority: 16.09.2016 IT 201600093576
(43) Date of publication of application: 28.03.2018
(73) Proprietor: Carimali S.p.A. Con Socio Unico, 24121 Bergamo (IT)
(72) Inventor: DE NICOLO, Michele, 20863 Concorezzo (IT); VANZULLI, Pierangelo, 21040 Gerenzano (IT)
(74) Representative: Eccetto, Mauro

(56) References cited:
- WO-A1-02/19877
- WO-A1-03/105645
- WO-A1-2007/008067
- WO-A1-2011/113474
- DE-A1- 1 929 877

## Description

### Technical field of the Invention

The present invention relates to a machine for preparing brewed beverages, such as coffee or tea-based beverages, from loose anhydrous material or capsules thereof.

Specifically, the present invention relates to an automatic beverage preparation machine comprising at least one brewing device in which the beverage is brewed by feeding a sealed chamber with a dose of material to be brewed and causing a certain quantity of hot water to percolate through the material.

In general, the above-described automatic beverage preparation machines are used to prepare both "short" beverages, such as so-called "espresso" coffee, and "long" beverages, such as tea or so-called "Fresh Brew" coffee.

These two types of beverages differ, in addition to the quantity of beverage that is produced in each dispensing cycle and that is obviously greater for the "long" type beverages, also in the aesthetic and organoleptic characteristics of the beverages.

In general, in fact, a "short" beverage, such as an espresso, is particularly appreciated when it comprises a thick and stable fine foam layer, the so-called "crema"; on the contrary, a "long" beverage is particularly appreciated when it comprises an entirely smooth appearance, with no trace of foam on the surface of the beverage in the cup.

The formation of the "crema" depends, in general, on various issues such as the particle size of the ground coffee, the amount and the degree of compaction of the ground coffee inside the percolation chamber, the pressure of the hot water fed through the percolation chamber and the size of the percolation chamber itself.

### Prior Art

As is known, in the last decades, various solutions have been proposed to improve the characteristics of "short" and "long" beverages obtained by brewing under pressure. The document WO 03/105645 A1 discloses an apparatus for preparing a beverage with a froth layer.

The Applicant has observed that, while as regards the "short" type beverages the known solutions have achieved satisfactory and consistent results in the quality of the "crema" on the beverage, for "long" beverages there has been greater difficulty in preventing the beverage, once in the cup, from containing some traces of foam. In fact, the spontaneous formation of a thin layer of foam on the surface of the beverage has found to be substantially inevitable due to the swirling motions created inside the beverage when extracted.

### Object and Summary of the Invention

Aim of the present invention is providing a beverage preparation machine capable of producing "long" brewed beverages which are substantially devoid of foam when dispensed into the cup.

According to the present invention a beverage preparation machine is provided, as claimed in the appended claims.

### Brief description of the drawings

Figure 1 is a perspective view, with parts removed for clarity, of a machine for preparing beverages according to the present invention;
Figure 2 illustrates, in larger scale and partially in cross-section, a detail of figure 1; and
Figure 3 illustrates, in perspective view partially exploded, the detail of figure 2 during use.

### Detailed Description of Preferred Embodiments of the Invention

The present invention will now be described in detail with reference to the appended figures to enable a person skilled in the art to make and use it. Various modifications to the embodiments described will be immediately apparent to the person skilled in the art and the general principles described may be applied to other embodiments and applications while remaining within the sphere of protection of the present invention, as defined in the appended claims. The present invention should not therefore be considered as limited to the embodiments described and illustrated, but given a broader scope of protection according to the principles and characteristics described and claimed herein.

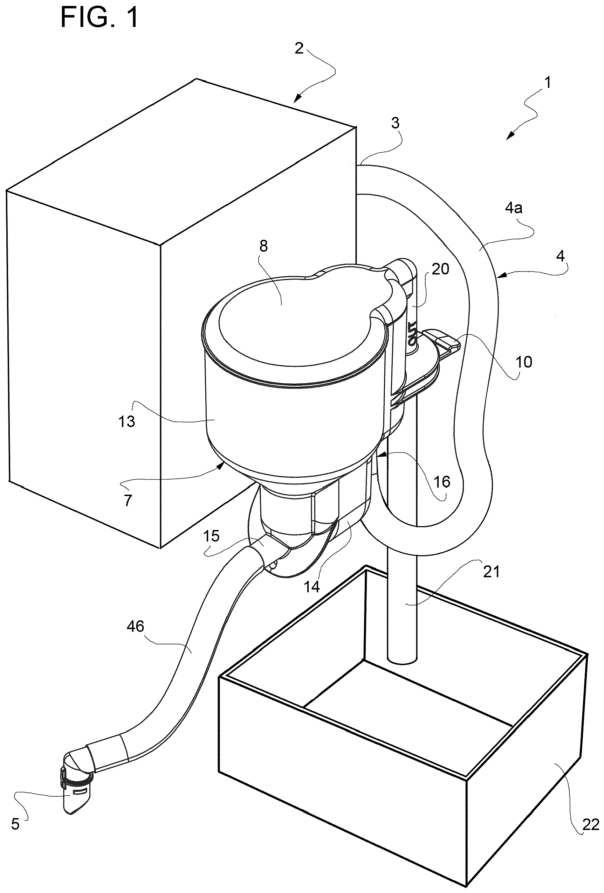

With reference to figure 1, reference numeral 1 globally denotes an automatic machine for preparing beverages.

The machine 1 comprises a hard, outer casing (not shown) housing one or more units functional to the production of beverages, including at least one brewing device 2 for the production of a beverage by extraction under pressure of an anhydrous material, and, preferably at least one mixer group (not shown) for the production of beverages from a soluble material.

In particular, the brewing device 2 is of a known type and suitable to produce "long" type beverages, such as "fresh brew" coffee or tea.

The brewing device 2 can be made according to a variety of known solutions in the field of infused beverage production, provided they are suitable for the purpose; for this reason, the brewing device 2 is illustrated schematically in the appended drawings and will not be described in detail in the discussion that follows.

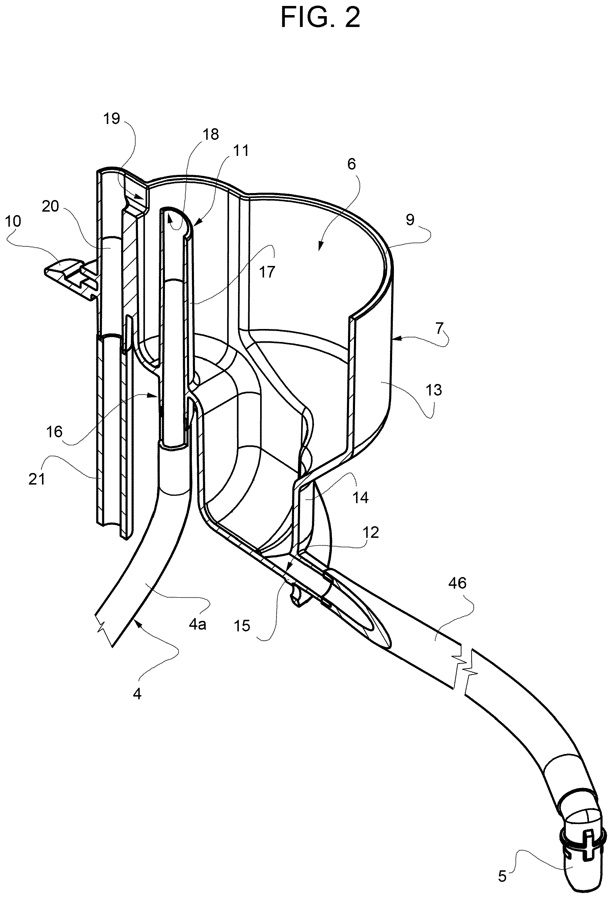

As shown in figures 1 and 2, the brewing device 2 has an outlet 3 for the infused beverage, communicating fluidically, via a duct 4, with a dispensing nozzle 5 through which the beverage is fed inside a cup (not shown).

The machine 1 further comprises an accumulation volume 6, which communicates fluidically with the outlet 3 of the brewing device 2 and with the dispensing nozzle 5, is arranged upstream of the dispensing nozzle 5, and has the function of collecting and, consequently, slowing down the flow of beverage coming from the brewing device 2 so as to feed to the cup a beverage substantially free of traces of foam.

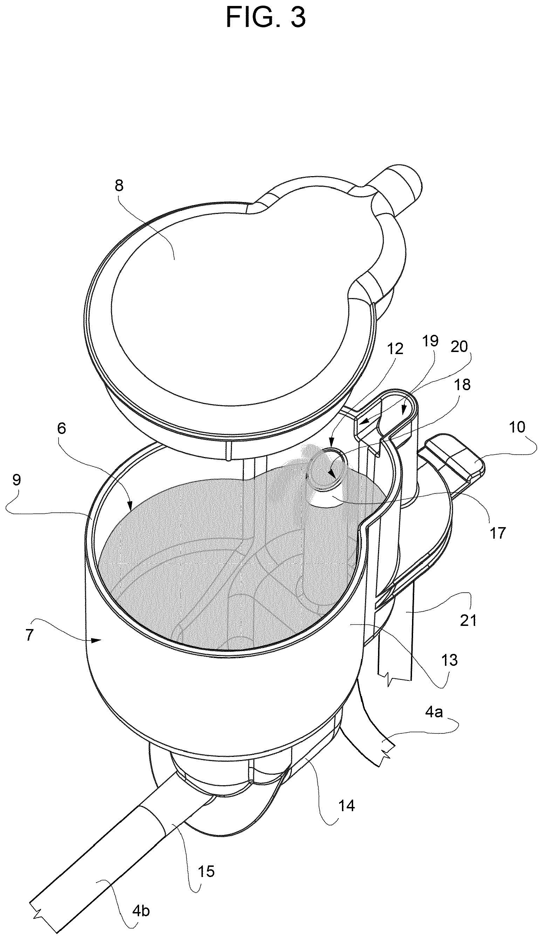

In particular, as shown in figure 2, the accumulation volume 6 is defined by a cup-shaped body 7 with its opening facing upwards and closed by a cover 8 coupled in a removable manner (figures 1 and 3) to a free upper edge 9 of the cup-shaped body 7.

The cup-shaped body 7 is supported in a fixed position by the frame (not shown) of the machine 1 by means of a coupling member 10, in the example shown, a spring clip suitable to allow the cup-shaped body 7 to be able to be removed easily and quickly by an operator in case of maintenance or cleaning.

The cup-shaped body 7 is arranged along the duct 4 and identifies, along said duct 4, a section 4a, which extends between the outlet 3 of the brewing device 2 and an inlet 11 of the cup-shaped body 7, and a section 4b, which extends between an outlet 12 of the cup-shaped body 7 and the dispensing nozzle 5.

The outlet 12 of the cup-shaped body 7 is made in a bottom portion of the latter so as to allow, in use, the output of the entire beverage collected in the accumulation volume 6. The inlet 11 is instead preferably arranged at a higher level than the outlet 12 and sufficiently far from the latter as not to create in the beverage swirling motions in the vicinity of the beverage outlet zone from the accumulation volume 6.

According to the preferred embodiment illustrated in the appended figures, the cup-shaped body 7 has a shape generally tapered towards the bottom and comprises an upper portion 13 generally cylindrical delimited at the top by the edge 9, and a narrowed lower portion 14 connected with the upper portion 13 by means of a truncated conical wall flared towards the top.

The lower portion 14 bears connected to it an external tubular appendage 15, which is integral with the cup-shaped body 7, communicates directly on one side with the accumulation volume 6 and is connected on the opposite side, to an initial end of the section 4b so as to place in fluidic communication the accumulation volume 6 with the dispensing nozzle 5.

The tubular appendage 15 defines, therefore, the outlet 12 of the cup-shaped body 7.

The inlet 11 of the cup-shaped body 7 is made, instead, in a further tubular appendage 16, which is integral with the cup-shaped body 7, extends through the side wall of said cup-shaped body 7 and comprises an inner portion, which is placed inside the accumulation volume 6, and an outer portion, which is placed outside the accumulation volume 6 and is connected, at its free end, to a terminal end of the portion 4a for placing in fluid communication the accumulation volume 6 with the outlet 3 of the brewing device 2.

The inner portion of the tubular appendage 16 defines, therefore, the above-mentioned inlet 11 of the cup-shaped body 7 and has the shape of a cylindrical and substantially vertical chimney 17, through which, in use, the beverage extracted by the brewing device 2 rises up until it flows into the accumulation volume 6 through an outlet opening 18 at the top of the chimney 17.

Preferably, the chimney 17 has a height such that said outlet opening 18 is always higher up than the free surface of the beverage which is being collected, in use, in the accumulation volume 6. Consequently, when the beverage flows out from the outlet opening 18, it flows down progressively filling the cup-shaped body 7, which, at the same time is emptied of the amount of beverage which flows out through the outlet 12.

In this regard it should be noted that the beverage accumulates inside the cup-shaped body 7 due to a difference between the inlet flow and the outlet flow, which must be less than the inlet flow. To obtain this difference in flow rate, the flow section of the chimney 17 and the flow section of the tubular appendage 15 must be suitably dimensioned taking into account that the speed of the beverage that enters the cup-shaped body 7 is greater than that which comes out. Preferably, the flow section of the chimney 17 is greater than that of the tubular appendage 15.

According to a variant not illustrated, the accumulation of the beverage can be obtained by acting on the difference between the input speed and the beverage output speed instead of on the difference of the input and output flow sections.

According to a further variant not illustrated, the accumulation of the beverage in the cup-shaped body 7 can be obtained by delaying the output of the beverage from said cup-shaped body 7. This can be achieved, for example, by means of a valve placed at or downstream of the outlet 12 and controlled so as to prevent the output of the beverage from the cup-shaped body 7 for a specific amount of time from when the beverage begins to fill the cup-shaped body 7.

As illustrated in figure 2, lastly, the cup-shaped body 7) presents an overflow opening 19, which is made on a side wall of the cup-shaped body 7 at a certain distance from the bottom, preferably below the outlet opening 18 of the chimney 17.

The overflow opening 19 communicates fluidically with a channel 20 made in the cup-shaped body 7 and connected, at its free end, to a drainage duct 21 which flows into a collection basin 22.

In the embodiment illustrated in the Figures, in use, following the selection of a beverage by a user, the brewing device 2 is activated and carries out a brewing cycle to produce the beverage requested. During the extraction, the beverage produced is pushed toward the outlet 3 of the brewing device 2 and reaches, through the section 4a, the cup-shaped body 7. As soon as the lower portion 14 of the cup-shaped body 7 starts to fill up, the beverage begins to flow by gravity through the outlet 12 and reaches, through the section 4b, the nozzle 5 to flow, lastly, into the cup.

The result obtained is a beverage with an upper surface substantially free of foam or, in any case, markedly less than that of beverages made by the machines of the prior art.

This result follows as an effect of the presence of the accumulation volume 6. In fact, in the accumulation volume 6 the swirling motions present in the beverage are damped and a substantially static environment is created in which any foam that may be present on the beverage quickly dissolves.

For the purposes of achieving this result the presence of the chimney 17 is particularly advantageous. In fact, the movement created by the beverage which flows from the chimney 17 and precipitates onto the surface of the beverage collected in the cup-shaped body 7 has the effect of destabilizing and making any micro-bubbles present on the surface collapse.

## Claims

1. A beverage preparation machine (1) comprising a brewing device (2); a dispensing nozzle (5) fluidically connected to an outlet (3) of the brewing device (2); and a beverage accumulation volume (6) arranged between, and fluidically connected to, the outlet (3) of the brewing device (2) and the dispensing nozzle (5); the beverage accumulation volume (6) is defined by a cup-shaped body (7) having a beverage inlet (11) fluidically connected to the outlet (3) of the brewing device (2), and a beverage outlet (12) fluidically connected to the dispensing nozzle (5) and arranged at the bottom of the cup-shaped body (7); the beverage preparation machine is **characterised in that** the beverage inlet (11) of the cup-shaped body (7) is defined by a chimney (17), which is arranged inside the cup-shaped body (7), extends upwards, and is provided at its free end with a beverage outlet opening (18).

2. The beverage preparation machine (1) according to claim 1, wherein the chimney (17) has a flow section greater than a flow section of the beverage outlet (12) of the cup-shaped body (7).

3. The beverage preparation machine (1) according to claim 1 or 2, and comprising a valve arranged at, or downstream from, the beverage outlet (12) of the cup-shaped body (7) and controllable to prevent the beverage from flowing out of the cup-shaped body (7) for a period of time from when the beverage begins to fill the cup-shaped body (7).

4. The beverage preparation machine (1) according to any of the preceding claims, wherein the cup-shaped body (7) comprises an overflow opening (19)arranged on a side wall of the cup-shaped body (7) at a distance from the bottom of the cup-shaped body (7), preferably below the outlet opening (18) of the chimney (17) and fluidically connected to a drainage channel (21).

5. The beverage preparation machine (1) according to any of the preceding claims, wherein the chimney (17) has a height such that said outlet opening (18) is at a level higher than a free surface of the beverage in the cup-shaped body (7).

## Patentansprüche

1. Getränkezubereitungsmaschine (1), die eine Brühvorrichtung (2); eine Ausgabedüse (5), die mit einem Auslass (3) der Brühvorrichtung (2) strömungstechnisch verbunden ist; und ein Getränkesammelvolumen (6), das zwischen dem Auslass (3) der Brühvorrichtung (2) und der Ausgabedüse (5) angeordnet und strömungstechnisch verbunden ist, umfasst; wobei das Getränkesammelvolumen (6) durch einen becherförmigen Körper (7) definiert ist, der einen Getränkeeinlass (11), der mit dem Auslass (3) der Brühvorrichtung (2) strömungstechnisch verbunden ist, und einen Getränkeauslass (12), der mit der Ausgabedüse (5) strömungstechnisch verbunden und an dem Boden des becherförmigen Körpers (7) angeordnet ist, aufweist; wobei die Getränkezubereitungsmaschine **dadurch gekennzeichnet ist, dass** der Getränkeeinlass (11) des becherförmigen Körpers (7) durch ein Steigrohr (17) definiert ist, das in dem becherförmigen Körper (7) angeordnet ist, sich nach oben erstreckt und an seinem freien Ende mit einer Getränkeauslassöffnung (18) versehen ist.

2. Getränkezubereitungsmaschine (1) nach Anspruch 1, wobei das Steigrohr (17) einen Strömungsquerschnitt aufweist, der größer als ein Strömungsquerschnitt des Getränkeauslasses (12) des becherförmigen Körpers (7) ist.

3. Getränkezubereitungsmaschine (1) nach Anspruch 1 oder 2, die ein Ventil umfasst, das an dem Getränkeauslass (12) des becherförmigen Körpers (7) oder stromabwärts davon angeordnet ist und gesteuert werden kann, um zu verhindern, dass das Getränk für eine Zeitspanne aus dem becherförmigen Körper (7) strömt, wenn das Getränk den becherförmigen Körper zu füllen beginnt.

4. Getränkezubereitungsmaschine (1) nach einem der vorhergehenden Ansprüche, wobei der becherförmige Körper (7) eine Überlauföffnung (19) umfasst, die an einer Seitenwand des becherförmigen Körpers (7) in einem Abstand von dem Boden des becherförmigen Körpers (7), vorzugsweise unter der Auslassöffnung (18) des Steigrohrs (17) angeordnet ist und mit einem Ablaufkanal (21) strömungstechnisch verbunden ist.

5. Getränkezubereitungsmaschine (1) nach einem der vorhergehenden Ansprüche, wobei das Steigrohr (17) eine Höhe hat, die derart gewählt ist, dass die Auslassöffnung (18) auf einer Höhe liegt, die höher als eine freie Oberfläche des Getränks in dem becherförmigen Körper (7) ist.

## Revendications

1. Machine de préparation de boissons (1) comprenant un dispositif d'infusion (2) ; une buse de distribution (5) connectée fluidiquement à une sortie (3) du dispositif d'infusion (2) ; et un volume accumulateur de boissons (6) disposé entre, et connecté fluidiquement à, la sortie (3) du dispositif d'infusion (2) et la buse de distribution (5) ; le volume accumulateur de boissons (6) est défini par un corps en forme de coupelle (7) ayant une entrée de boissons (11) connectée fluidiquement à la sortie (3) du dispositif d'infusion (2), et une sortie de boissons (12) connectée fluidiquement à la buse de distribution (5) et disposée au fond du corps en forme de coupelle (7) ; la machine de préparation de boissons est **caractérisée en ce que** l'entrée de boissons (11) du corps en forme de coupelle (7) est définie par une cheminée (17) qui est disposée à l'intérieur du corps en forme de coupelle (7), s'étend vers le haut, et est pourvue au niveau de son extrémité libre d'une ouverture de sortie de boissons (18).

2. Machine de préparation de boissons (1) selon la revendication 1, dans laquelle la cheminée (17) présente une section d'écoulement supérieure à une section d'écoulement de la sortie de boissons (12) du corps en forme de coupelle (7).

3. Machine de préparation de boissons (1) selon la revendication 1 ou 2, et comprenant une soupape disposée au niveau de la sortie de boisson (12) du corps en forme de coupelle (7), ou en aval de celle-ci, et pouvant être commandée pour empêcher que la boisson ne s'écoule hors du corps en forme de coupelle (7) pendant une période de temps allant depuis le moment où la boisson commence à remplir le corps en forme de coupelle (7).

4. Machine de préparation de boissons (1) selon l'une quelconque des revendications précédentes, dans laquelle le corps en forme de coupelle (7) comprend une ouverture de trop-plein (19) disposée sur une paroi latérale du corps en forme de coupelle (7), à distance depuis le fond du corps en forme de coupelle (7), de préférence en dessous de l'ouverture de sortie (18) de la cheminée (17) et connectée fluidiquement à un canal de drainage (21).

5. Machine de préparation de boissons (1) selon l'une quelconque des revendications précédentes, dans laquelle la cheminée (17) a une hauteur telle que ladite ouverture de sortie (18) est à un niveau supérieur à une surface libre de la boisson dans le corps en forme de coupelle (7).
